# EUROPEAN PATENT SPECIFICATION

(11) **EP 1 717 135 B1**
(45) Date of publication and mention of the grant of the patent: **11.02.2009**
(21) Application number: 06075902.4
(22) Date of filing: 18.04.2006
(51) Int. Cl.: B62H 5/14, E05B 17/20

(54) **Bicycle lock**
Fahrradschloss
Antivol de bicyclette

(30) Priority: 27.04.2005 NL 1028885
(43) Date of publication of application: 02.11.2006
(73) Proprietor: STENMAN HOLLAND B.V., 3903 AV Veenendaal (NL)
(72) Inventor: De Roos, Henk, 3901 WH Veenendaal (NL); Van Ede, Marinus Tijmen, 6691 ZL Gendt (NL)
(74) Representative: van Loon, C.J.J.

(56) References cited:
- EP-A- 0 728 659
- WO-A-20/04057136
- DE-A1- 2 557 063
- GB-A- 2 318 824
- NL-C2- 1 004 151

## Description

The invention relates to a bicycle lock, comprising a lock housing and a lock cylinder, the lock cylinder being provided with:
- a first cylinder part with a key cavity extending from an outside end of this cylinder part for receiving an operating key, the key cavity being provided with locking plates operable by the key; and
- a second cylinder part coupled to the first cylinder part, which second cylinder part is provided with an operating element for operating at least one locking element of the lock during normal use of the lock; and the lock cylinder is provided with at least one breakable joint such that the second cylinder part can be uncoupled from the first cylinder part through breaking of this joint.

Such a lock is known from Dutch patent NL 1004151. The known bicycle lock is provided with a lock housing, and a lock cylinder received therein, cooperating with a locking element and provided at an end of a key opening. The lock cylinder is resistant to forcing through the use of a blocking element received in the housing and cooperating with the lock cylinder. The blocking element blocks the cylinder against rotation upon an axial displacement into the lock housing of the lock cylinder.

The object of the present invention is an improvement of a bicycle lock. In particular, the invention contemplates a bicycle lock which is particularly well protected against forcing, while preferably, operation of the lock can be prevented well after the lock cylinder has been forced with, for instance, an elongated tool.

According to the invention, the bicycle lock is characterized in that the second cylinder part is not provided with the key cavity.

During normal use, the cylinder can be rotated by means of a matching key. The first cylinder part is then rotated by means of the key. The breakable joint is preferably so strong that during normal use of the key, the first cylinder part carries the second cylinder part along in order that the operating element of the second cylinder part can effect a desired operation of the lock.

During an attempt at forcing, the lock cylinder can for instance be forced by means of an elongated tool, wherein the tool is struck into the cavity of the first cylinder. However, this key cavity does not reach into the second cylinder part. That is why the tool cannot reach the second cylinder part. It is therefore not possible that with the tool, direct force is applied to the second cylinder part, which renders operating the locking element of the lock operating part by means of this tool particularly difficult, if not impossible.

Under the influence of an attempt at forcing, the first breakable joint can for instance be broken so that the second cylinder part is no longer coupled in a manner fixed for rotation to the first cylinder part. In that case, the lock is protected well against unauthorized operation, since the operating element can hardly, if at all, be operated with tools from a surroundings.

According to the invention, it is advantageous when the lock is provided with blocking means that are arranged to engage a part of the second cylinder part such, at least after the cylinder has been brought from a normal position of use to a forced position moved axially inwards relative to the lock housing, that the blocking means check a rotation of the second cylinder part.

Under the influence of this checking by the blocking means, the first and second cylinder part can be uncoupled from each other in a simple manner, whereby a breaking of the first breakable joint occurs. Then, the second cylinder part is virtually inoperable for tools struck into the cylinder, so that operation of the lock is prevented.

The invention further provides a bicycle according to claim 13, and a cylinder according to claim 14, which offers the above-mentioned advantages.

Further elaborations of the invention are described in the subclaims. Presently, the invention will be clarified with reference to two exemplary embodiments and the drawing. In the drawing:
Fig. 1 shows a perspective front view of a first exemplary embodiment according to the invention;
Fig. 2 shows a longitudinal cross-sectional view of a part of a first exemplary embodiment, in a condition of use;
Fig. 3 shows a cross-sectional view along the line III-III of Fig. 2;
Fig. 4A shows a side view of a part of the first exemplary embodiment;
Fig. 4B shows a cross-sectional view along the line V-V of Fig. 4, in the position of use;
Fig. 5 shows a perspective, exploded view of a part of the exemplary embodiment represented in Fig. 1;
Fig. 6 shows detail Q of Fig. 5 in the position of use mentioned;
Fig. 7 shows a similar view to Fig. 2, in a forced position;
Fig. 8 shows a cross-sectional view along the line VII-VII of Fig. 7;
Fig. 9 shows a similar view to Fig. 6, in the forced position;
Fig. 10 shows a front view of the cylinder of the first exemplary embodiment;
Fig. 11 shows a perspective front view of a second exemplary embodiment of the invention;
Fig. 12 shows a cross-sectional view of a lock part of the exemplary embodiment represented in Fig. 11, in a position of use;
Fig. 13 shows a perspective drawing of a cylinder and end plate of the lock part represented in Fig. 12, in the position of use;
Fig. 14 shows a cross-sectional view of the lock part of the exemplary embodiment represented in Fig. 11, in a forced position;
Fig. 15 shows a perspective drawing of a cylinder and end plate of the lock part represented in Fig. 14, in the forced position; and
Fig. 16 shows a longitudinal cross-section of the cylinder of the second exemplary embodiment.

In the present application, identical or corresponding features are indicated with identical or corresponding reference numerals.

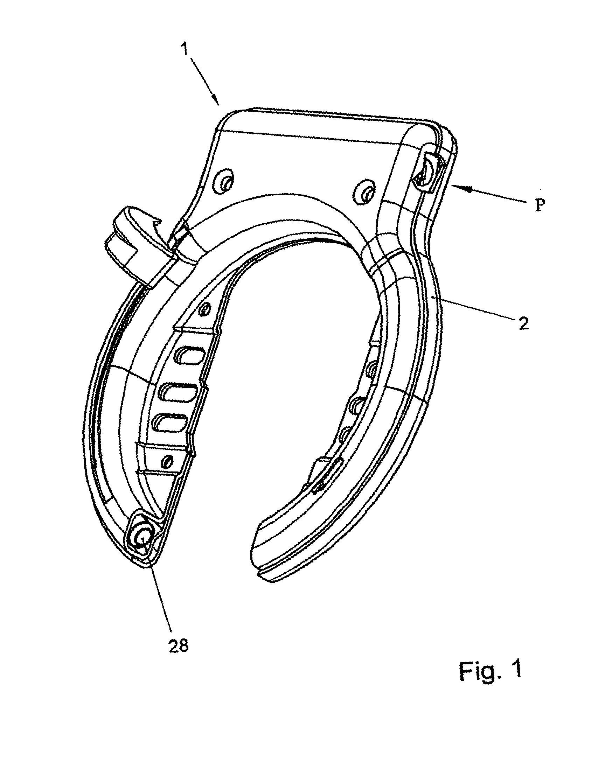

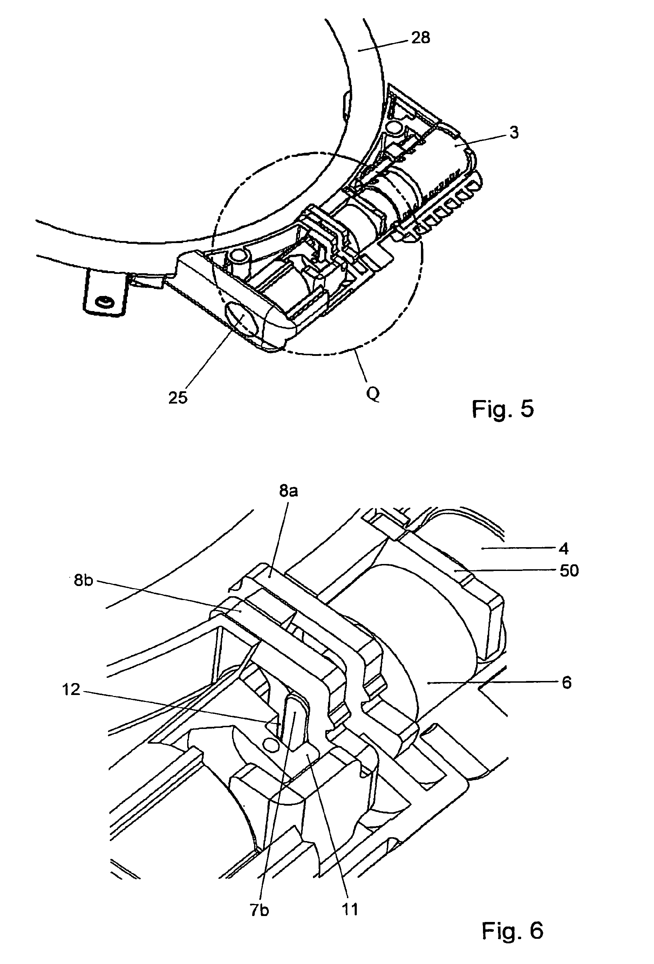

Figs. 1- 9 show a first exemplary embodiment of a bicycle lock 1. The first exemplary embodiment is, in particular, a ring lock 1. The ring lock is provided with a lock housing 2 with an annular locking bolt 28. The ring lock 1 may additionally be provided with a recess 25 for receiving a cable pin of a loop-shaped antitheft cable (not shown). The lock housing 2 comprises a cylinder housing C with a cylinder 3. In Fig. 1, an arrow P indicates the insertion direction for inserting an operating key (not shown) into a key insertion cavity 9 of the lock cylinder 3. The insertion cavity 9 is provided with locking plates which are operable by the key. Through operation of the lock cylinder 3, at least through rotation thereof, a locking pawl 8a and a cable pawl 8b can be operated for the purpose of locking/unlocking said locking bolt or cable pin, respectively. Such a ring lock is known per se from practice.

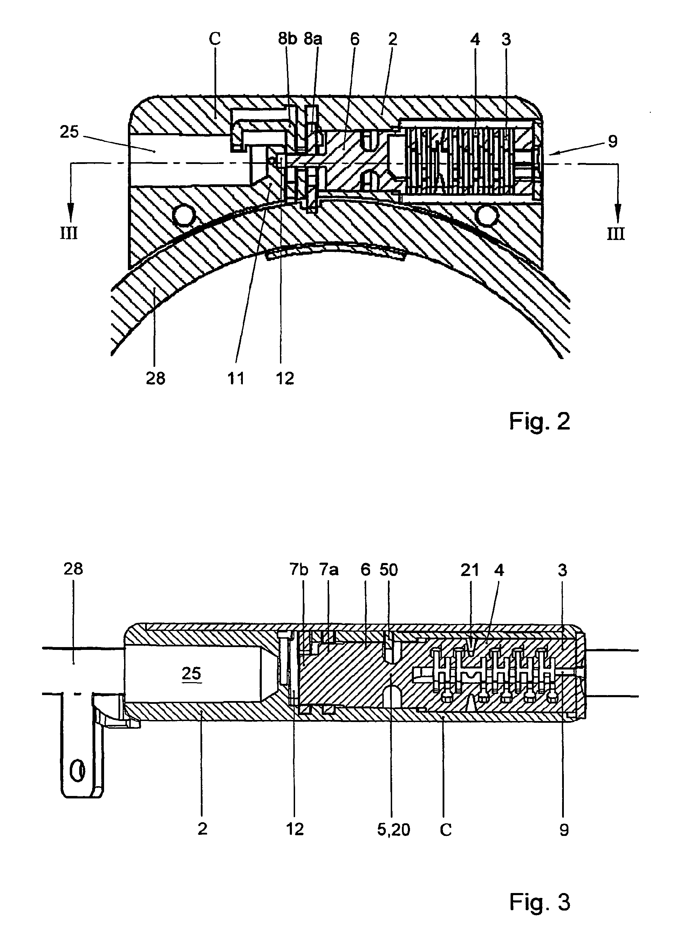

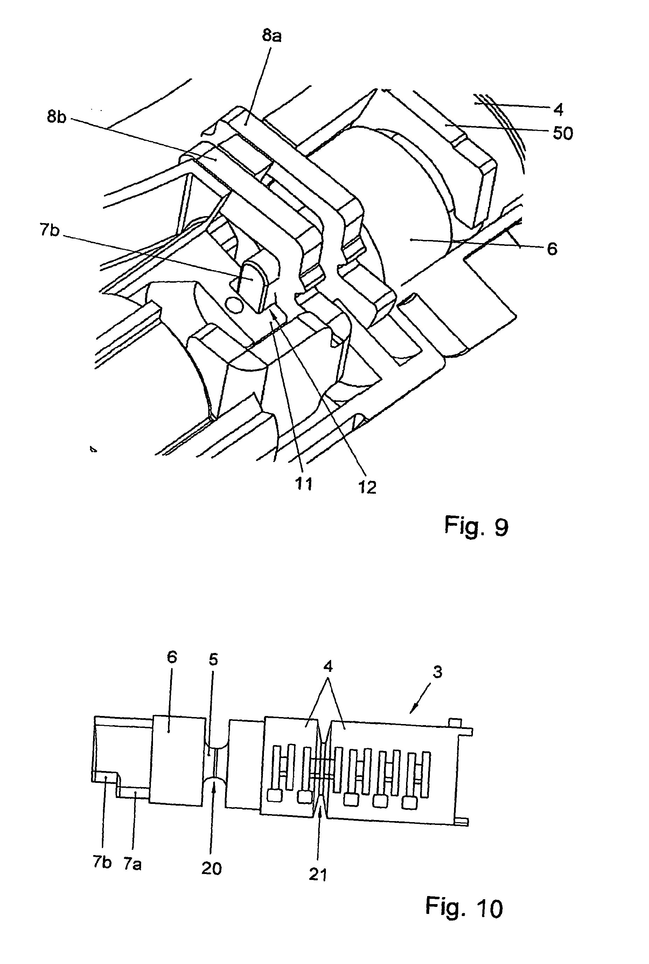

According to the present invention, the lock cylinder 3 of the first exemplary embodiment 1 is provided with (see Figs. 3 and 10):
- a first cylinder part 4 with a cavity 9 extending from an outer end of this cylinder part 4 for receiving an operating key; and
- a second cylinder part 6 coupled (fixed for rotation) to the first cylinder part 4, which second cylinder part is integrally provided with operating elements 7a, 7b for operating the locking pawl 8a and cable pawl 8b during normal use of the lock. Therefore, the key cavity 9 only reaches into the first cylinder part 4 and not into the second cylinder part 6 and the second cylinder part is not provided with the locking plates mentioned. As a result, a forcing tool struck into the key cavity 9 cannot engage the second cylinder part.

A normal position of use of the lock 1 is represented in Figs. 1 - 6. The cylinder 3 of the lock 1 is provided with two operating elements, i.e a locking pawl operating projection 7a for operating the locking pawl 8a, and a cable pawl operating projection 7b extending axially to the locking pawl projection 7b, for the purpose of operating the cable pawl 8b. The operating projections 7a, 7b extend at an end face of the second cylinder part 6 (see Fig. 10).

As shown in Fig. 10, the second cylinder part 6 is coupled to an inner end face of the first cylinder part 4 via a cylinder intermediate part 5. The intermediate part 5 comprises a first breakable joint 20, so that the second cylinder part 6 can be uncoupled from the first cylinder part 4 through breaking of this joint 20. After breaking the first breakable joint 20, the first cylinder part 4 can be rotated independently of the second cylinder part 6.

The first breakable joint 20 can be designed in various manners, for instance as a reduced portion, a weakening, breaker groove, breakable material and/or the like. The first breakable joint 20 is especially designed to break when the cylinder intermediate part 5 is subjected to a torque greater than torque normally experienced by this intermediate part 5 during normal use of the lock. In addition, the first breakable joint 20 can break, for instance, under the influence of a pull-out force which is applied to the first cylinder part 4 for pulling the cylinder 3 from the lock housing 2. The cylinder housing C is provided with an arresting flange 50 for arresting the second cylinder part 6 when the cylinder 3 is being pulled out.

As shown in Figs. 1- 10, the first cylinder part 4 can for instance also be provided with such a breakable joint 21 or breaking point in order that the first cylinder part 4 itself is breakable into two parts under the influence of an attempt at forcing.

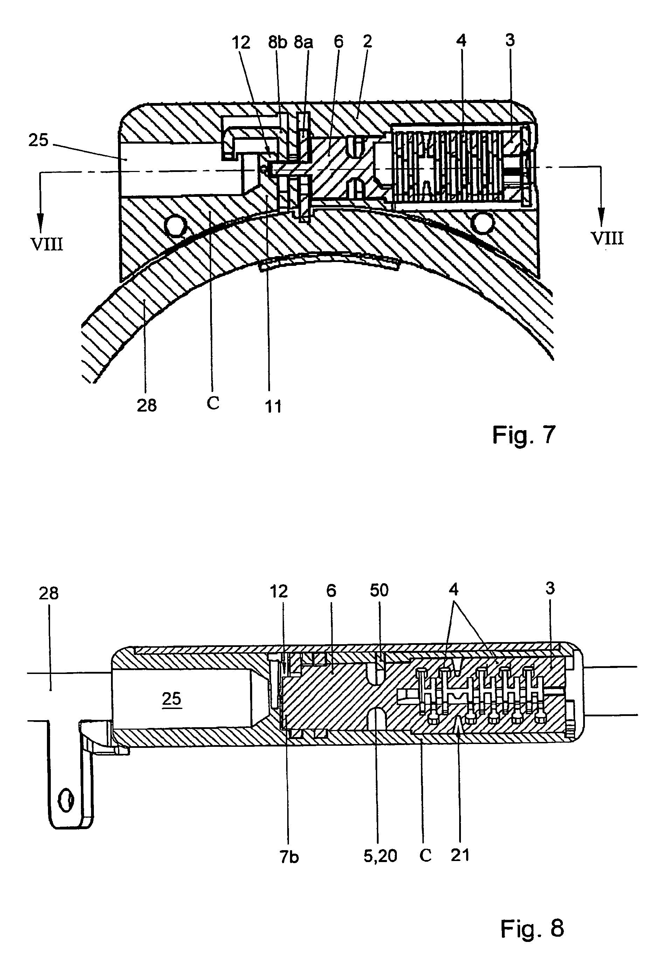

The lock 1 is further provided with blocking means 11 which are designed for engaging a part 7b of the second cylinder part 6 in such a manner, at least after the cylinder 3 has been brought from the normal position of use to a forced position moved axially inwards relative to the lock housing 2, that the blocking means 11 check a rotation of the second cylinder part 6. The forced position of the lock 1 is represented in Figs. 7 - 9. In the exemplary embodiment, the first breakable joint 20 is breakable under the influence of rotation of the first cylinder part 4, at least when the cylinder is in the forced position while rotation of the second cylinder part 6 is checked by the blocking means 11.

As shown in Figs. 2 - 9, the blocking means in the first exemplary embodiment are provided with a blocking element 11 immovably coupled to the lock housing 2. The blocking element 11 may be an integral part of the lock housing 2, and in particular of the cylinder housing C. The blocking element 11 is provided with a blocking recess 12 which is configured for engaging a blocking projection 7b of the second cylinder part 6 after the second cylinder part 6 has been brought in a position moved towards the blocking element 11. The blocking means can be designed in various other manners, and for instance comprise a blocking projection of the lock housing, which can engage a blocking recess of the second cylinder part, or in a different manner.

In the first exemplary embodiment, the cable pawl operating projection 7b also serves as the blocking projection 7b of the second cylinder part 6. As a result, the lock 1 can be designed to be, inter alia, relatively simple, compact and sturdy.

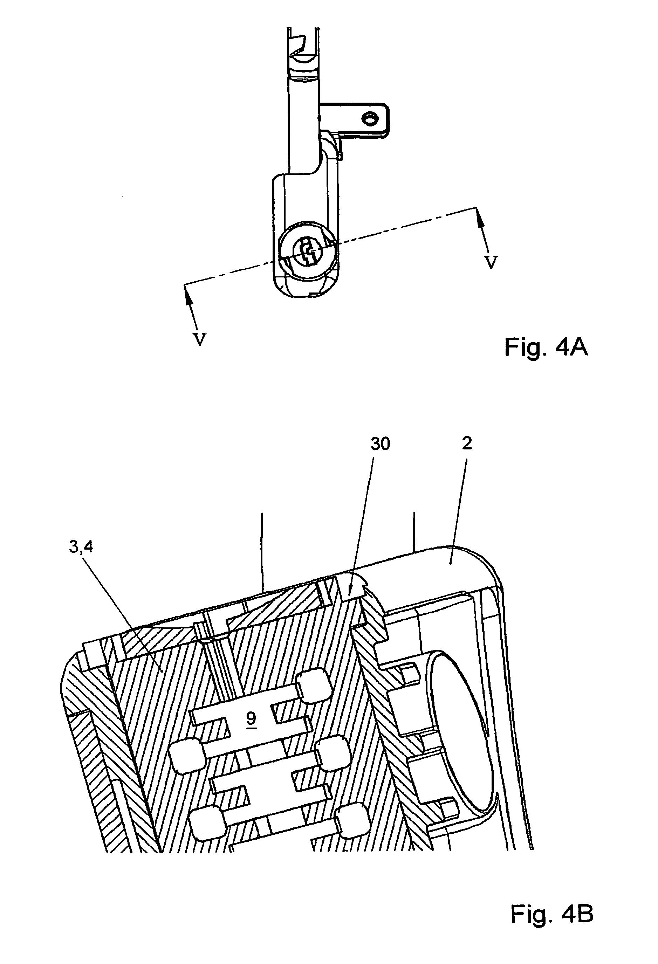

Further, in the normal position of use, the cylinder 3 is coupled by means of at least one second breakable joint 30 to the lock housing 2 in a manner such that the cylinder 3 can be brought from this normal position of use to a position moved axially inwards relative to the lock housing 2, after breaking of the second breakable joint 30. The second breakable joint 30 is clearly visible in Fig. 4B. This joint can comprise, for instance, a deformable projection 30 of the cylinder 3, which projection 30 engages the lock housing 2, or be designed in a different manner.

As shown in Figs. 2 - 6, with the lock in a normal position of use, the cable pawl operating projection 7b is located at a distance from the blocking recess 12 of the blocking part 11 of the lock housing 2.

When, during an attempt at forcing, a screwdriver or the like is struck with force into the key cavity 9, in the direction of insertion P mentioned, the second breakable joint 30 is broken. As a result, the cylinder 3 slides to the forced position shown in Figs. 7-9, and the cable pawl operating projection 7b of the second cylinder part 6 is slid into the blocking recess 12. If, thereupon, a great torque is applied to the first cylinder part 4 via this screwdriver, the first breakable joint 20 breaks so that the first and second cylinder part 4, 6 are uncoupled, at least as regards rotation. Then, it is primarily virtually impossible, if not totally so, to still rotate the second cylinder part 6 by means of the tool inserted into the key insertion hole 9, whereby undesired operation of the locking pawl 8a and the cable pawl 8b is prevented well. Secondly, the locking pawl 8a and cable pawl 8b thus remain in a closed position, and are blocked by the blocking part 11 of the lock housing 2, which offers additional safety against undesired opening of the lock 1.

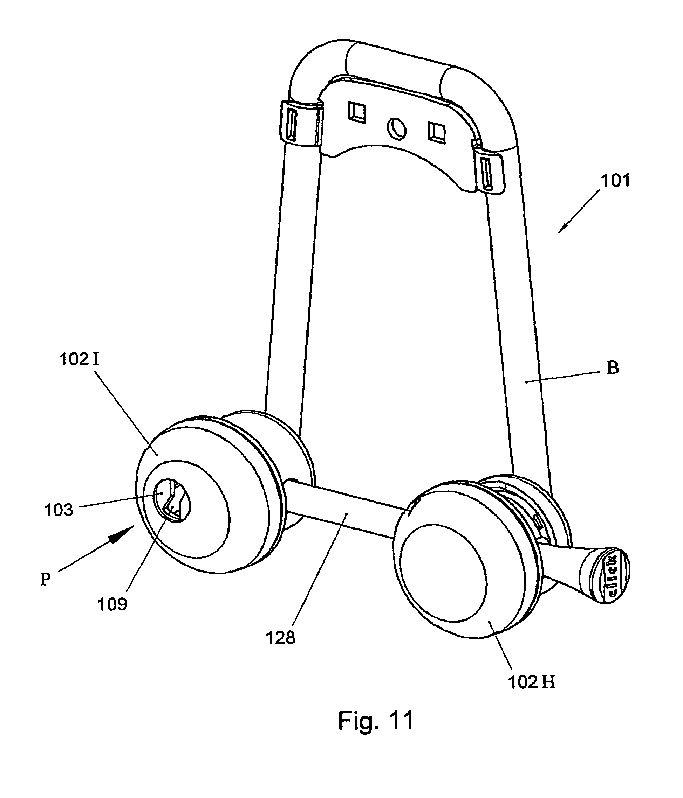

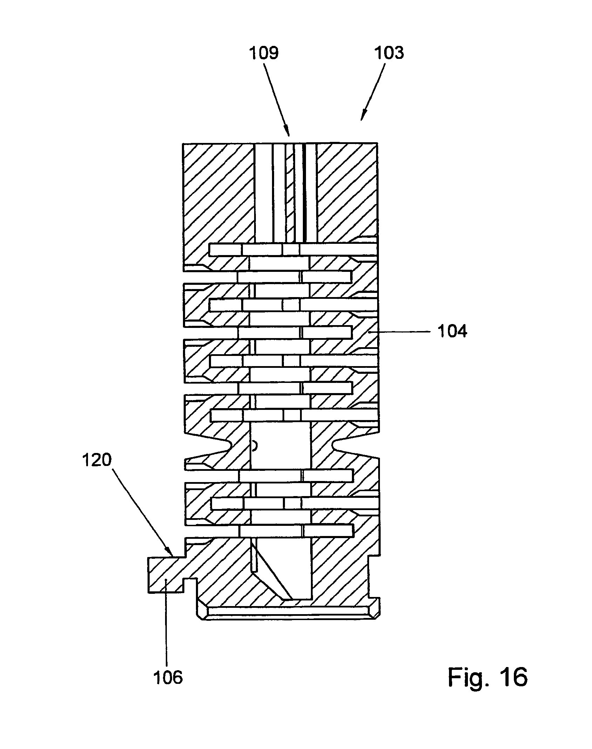

Figs. 11-16 show a second exemplary embodiment of the invention. The second exemplary embodiment comprises a bicycle lock 101 whose housing 102 is provided with a holder part 102H and a blocking element in the form of a lock pin 128, connectable to or connected to the holder part 102H, and with a separate receiving part 102I which is provided with a lock pin opening for receiving a free end of the lock pin with the lock in the closed position. The holder part 102H and receiving part 102I can be connected to each other by means of, for instance, a bracket B or the like, but this is not required. The lock pin 128 can further, for instance, be pivotally connected to the holder part 102H, or detachably connectable to the holder part 102H. The lock pin 128 can for instance be slideable into the holder part 102H or the like. The thus designed bicycle lock 101 may be fitted onto a fork of a bicycle. In use, the holder part 102H is for instance fitted adjacent one leg of the fork, while the lock pin 128 is pivotal between a releasing position, in which the lock pin 128 extends in a direction substantially parallel to said leg, and a blocking position in which the lock pin 128 extends between bicycle spokes, and is received by its free end in the receiving part 102I which, in use, is fitted adjacent another leg of the fork.

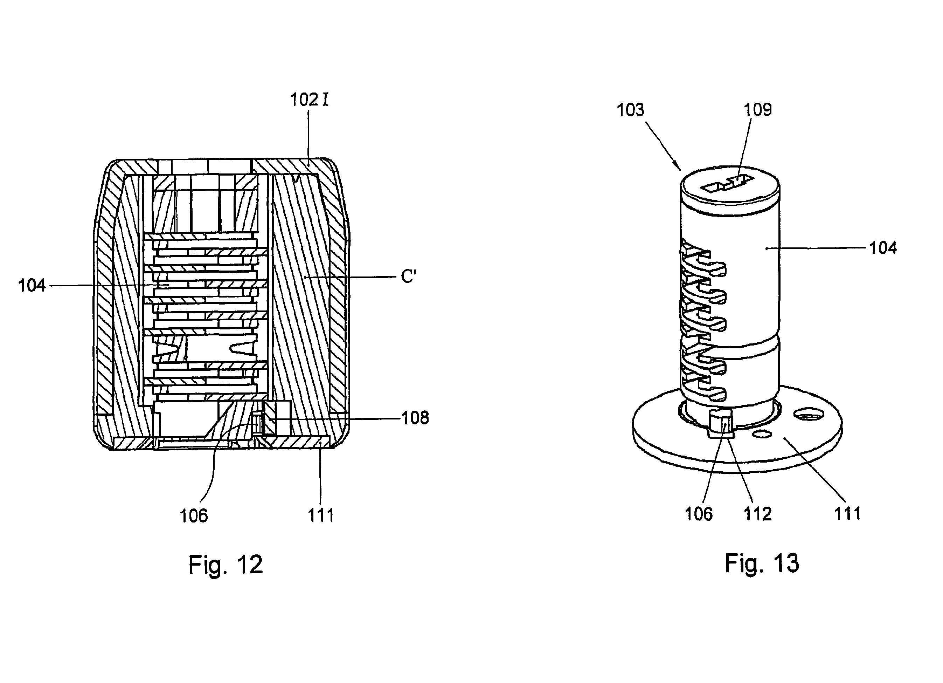

The receiving part 102I is provided with a cylinder housing C' in which the lock pin opening and a lock cylinder are located, as well as a locking pawl 108 (see Fig. 12) to be locked and released with the aid of the lock cylinder 103, which locking pawl is designed for engaging a free end of the lock pin 128. To that end, the lock pin 128 can be provided at the free end with a recess in which the locking pawl 108 can engage for locking, and from which the locking pawl 108 can be moved through rotation of the lock cylinder 3 in the receiving part 102I for releasing the lock pin 128. Such a lock is known per se from practice.

With the second exemplary embodiment 101, the lock cylinder 103 is provided (see Figs. 12 - 16) with a first cylinder part 104 with a cavity 109 extending from an outer end of this cylinder part 104 for receiving an operating key, and with a second cylinder part 106 coupled to the first cylinder part 104. The second cylinder part 106 is coupled by means of a first breakable joint 120 to an outer circumference of the first cylinder part 104. The breakable joint 120 comprises, for instance, a reduced portion, a weakening, a breaker groove, breakable material and/or the like.

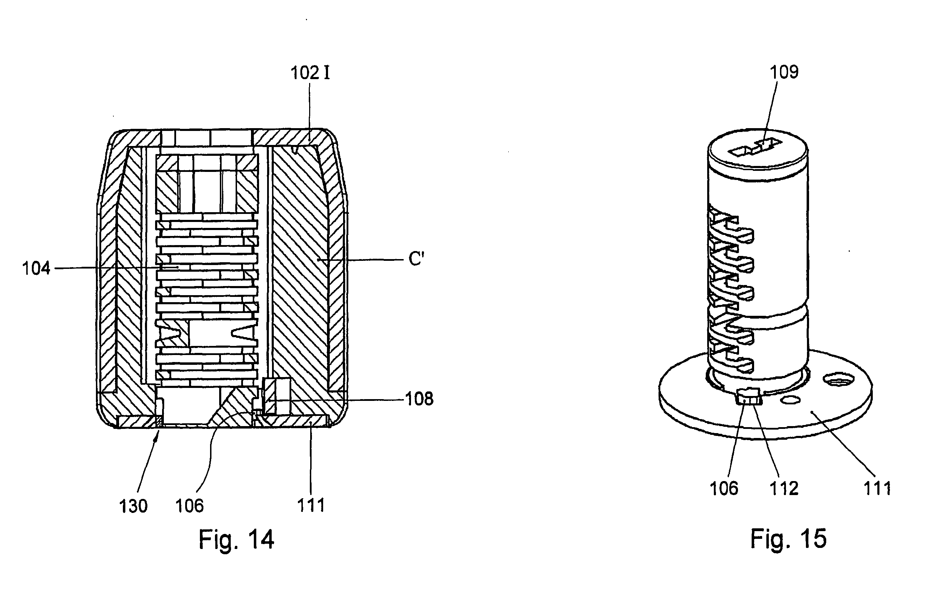

With the second exemplary embodiment, the second cylinder part 106 as such is the operating element 106 for operating the locking pawl 108 of the lock 101 during normal use of the lock. Therefore, the operating element 106 and said second cylinder part are one and the same part. The cavity 109 does not reach into the locking pawl operating element 106. The second exemplary embodiment is further provided with blocking means 111 which are designed for engaging the locking pawl operating element 106 such, at least after the cylinder 103 has been brought from the normal position of use to a forced position moved axially inwards relative to the lock housing 102, that the blocking means 111 check a rotation of the locking pawl operating element 106. The position of use is shown in Figs 12 - 13 and the forced cylinder position is represented in Figs. 14 - 15.

The blocking means of the second exemplary embodiment are provided with a blocking end plate 111, immovably coupled to the lock housing 102, with a blocking recess 112 for receiving the locking pawl operating element 106 after the cylinder 103 has been brought to the forced position. The blocking plate 111 can further serve for closing off one side of the receiving part 102I, for holding lock parts in the receiving part 102I. The second exemplary embodiment is further preferably provided with a second breakable joint, for instance a breaking edge or breaking ring 130, which couples the cylinder 103 to the lock housing 102 in a manner such that the cylinder 103 can be brought from the normal position of use to a position moved axially inwards relative to the lock housing 102, after breaking the second breakable joint. The second breakable joint breaks for instance when an object is struck from the outside into the cylinder 103.

When the cylinder 103 of the second exemplary embodiment has been forced to a position shown in Figs. 14 and 15, for instance after breaking said breaking edge or breaking ring 130, the locking pawl operating element 106 drops in the blocking recess 112 of the blocking plate 111, and the blocking plate 111 is blocked against rotation. If the cylinder 103 is then rotated with force, the locking pawl operating element 106 of the first cylinder part 104 will break off, through breaking of the breakable joint 120. Then, the cylinder 103 can rotate freely without being able to operate the locking pawl. Furthermore, the locking pawl operating element 106 is held against rotation by the blocking plate 111.

In this manner, the lock 102 is particularly well protected against an attempt at forcing.

According to the invention, in view of the above, for instance first, the cylinder of the bicycle lock can be forced inwards, for instance under the influence of a force of impact. As a result, the cylinder can be brought in a locking position. When, thereupon, the cylinder is forced in a direction of rotation, a coupling with a lock operating part can be broken, so that operation of the lock has become impossible.

It is self evident that the invention is not limited to the exemplary embodiments described. Various modifications are possible within the framework of the invention as set forth in the following claims.

## Claims

1. A bicycle lock, comprising a lock housing (2; 102) and a lock cylinder (3; 103), wherein the lock cylinder (3; 103) is provided with:
- a first cylinder part (4; 104) with a key cavity (9; 106) extending from an outside end of this cylinder part for receiving an operating key, the key cavity (9; 109) being provided with locking plates operable by the key; and
- a second cylinder part (6; 106) coupled to the first cylinder part (4; 104), which second cylinder part is provided with at least one operating element (7a, 7b; 106) for operating at least one locking element (8a, 8b; 108) of the lock (1; 101) during normal use of the lock; the cylinder (3; 103) is provided with at least one first breakable joint (20; 120) such that the second cylinder part (6; 106) can be uncoupled from the first cylinder part (4; 104) through breaking of this joint (20; 120) ;
**characterized in that** the second cylinder part (6; 106) is not provided with said key cavity (9; 109).

2. A bicycle lock according-to claim 1, wherein the lock is provided with blocking means (11; 111) which are designed for engaging a part (7b; 106) of said second cylinder part (6; 106) such, at least after the cylinder (3; 103) has been brought from a normal position of use to a forced position moved axially inwards relative to the lock housing (2; 102), that the blocking means (11; 111) check a rotation of the second cylinder part (6; 106).

3. A bicycle lock according to claim 2, wherein said blocking means are provided with a blocking element (11; 111) immovably coupled to the lock housing (2; 102), the blocking element (11; 111) being provided with a blocking recess (12; 112) or a blocking projection for engaging a blocking projection (7b; 106) or a blocking recess, respectively, of said second cylinder part (6; 106) after the second cylinder part (6; 106) has been brought to a position moved towards the blocking element (11; 111).

4. A bicycle lock according to claim 3, wherein a said operating element (7b; 106) on the one side and said blocking projection (7b) of the second cylinder part (6; 106) on the other side are one and the same part.

5. A bicycle lock according to any one of claims 2 - 4, wherein the said first breakable joint is breakable under the influence of rotation of the first cylinder part, at least when rotation of the second cylinder part is checked by the blocking means (11; 111).

6. A bicycle lock according to any one of the preceding claims, wherein the second cylinder part (6) is coupled to an inner end face of the first cylinder part (4), via a cylinder intermediate part (5), with said key cavity (9) not reaching into this intermediate part (5), while the cylinder intermediate part (5) is provided with a breaking part (20).

7. A bicycle lock according to claim 6, wherein said operating element (7a, 7b) is formed by at least one operating projection extending on the second cylinder part (6) for instance on an end face of this cylinder part (6).

8. A bicycle lock according to any one of claims 1- 5, wherein said operating element (106) and said second cylinder part are one and the same part.

9. A bicycle lock according to claim 8, wherein the second cylinder part (106) is coupled by means of said first breakable joint (120) to an outer circumference of the first cylinder part (104).

10. A bicycle lock according to any one of the preceding claims, wherein said first breakable joint (20; 120) comprises a reduced portion, a breaker groove, breakable material and/or a weakening of a respective lock part.

11. A bicycle lock according to any one of the preceding claims, wherein said cylinder (3; 103), in a normal position of use, is coupled by means of at least one second breakable joint (30; 130) to the lock housing (2; 102) such that the cylinder (3; 103) can be brought from this normal position of use to a position moved axially inwards relative to the lock housing (2; 102) after breaking of the second breakable joint (30; 130).

12. A bicycle lock according to any one of the preceding claims, comprising:
- a ring lock which is provided with a lock housing with an annular locking bolt; or
- a lock whose housing is provided with a holder part and with a blocking element in the form of a lock pin connectable to or connected to the holder part, and with a receiving part which is provided with a lock pin opening for receiving a free end of the lock pin with the lock in a closed position.

13. A bicycle provided with a lock according to any one of the preceding claims.

14. A cylinder of a lock according to any one of claims 1-12.

## Patentansprüche

1. Fahrradschloss, das ein Schlossgehäuse (2; 102) und einen SchließzylInder (3; 103) umfasst, wobei der Schließzylinder (3; 103) versehen Ist mit:
- einem ersten Zylinderteil (4; 104) mit einem Schlüsselhohlraum (9; 106), das sich von einem äußerten Ende dieses Zylinderteils erstreckt, um einen Bedienungsschlüssel aufzunehmen, wobei der Schlüsselhohlraum (9; 109) mit durch den Schlüssel bedienbaren Schließblechen versehen ist; und
- einem an das ersten Zylinderteil (4; 104) gekoppelten zweiten Zylinderteil (6; 106), das mit zumindest einem Bedlenungselement (7a, 7b; 106) zum Bedienen mindestens eines Schließelementes (8a, 8b; 108) des Schlosses (1; 101) während des normalen Gebrauchs des Schlosses versehen ist; der Zylinder (3; 103) ist mit zumindest einer ersten zerbrechlichen Verbindung (20; 120) versehen, derart, dass der zweite Zylinderteil (6; 106) von dem ersten Zylinderteil (4: z4) durch das Zerbrechen dieser Verbindung (20; 120) entkoppelt werden kinn;
**dadurch gekennzeichnet, dass** der zweite Zylinderteil (6; 106) nicht mit dem Schlüsselhohlraum (9; 109) versehen ist,

2. Fahrradschloss nach Anspruch 1, wobei das Schloss mit Blockiermitteln (11; 111) versehen ist, die eingerichtet sind, ein Teil (7b; 106) des zweiten Zylinderteils (6; 106) so zu greifen, zumindest nachdem der Zylinder (3; 103) aus einer normalen Gebrauchsposition in eine axial nach innen relativ zum Gehäuse (2; 102) bewegte Zwangsposition gebracht wurde, dass die Blockiermittel (11; 111) eine Rotation des zweiten Zylinderteils (6; 106) hemmen.

3. Fahrradschloss nach Anspruch 2, wobei die Blockiermittel mit einem Blockierelement (11; 111) versehen ist, das unbeweglich an das Schlossgehäuse (2; 102) gekoppelt ist, wobei das Blockierelement (11; 111) mit einer Blocklerausnehmung (12; 112) oder einem Blockletvorsprung versehen ist, um einen Blockiervorsprung (7b; 106) respektive eine Blockierausnehmung des zweiten Zylinderteils (6; 106) zu greifen, nachdem der zweite Zylinderteil (6; 106) in eine zum Blockierelement (11; 111) hin bewegte Position gebracht worden ist.

4. Fahrradschloss nach Anspruch 3, wobei ein genanntes Bedienungselement (7b; 106) auf der einen Seite und der Blockiervorsprung (7b) des zweiten Zylinderteils (6; 106) auf der anderen Seite ein und dasselbe Teil sind.

5. Fahrradschloss nach Irgendeinem der Ansprüche 2 bis 4, wobei die erste zerbrechliche Verbindung unter dem Einfluss der Rotation des ersten Zylinderteils zerbrechlich ist, zumindest, wenn Drehung des zweiten Zylinderteils durch das Blockiermittel (11; 111) gehemmt wird.

6. Fahrradschloss nach irgend einem der vorangegangenen Ansprüche, wobei das zweite Zylinderteil (6) mit einer inneren Stirnfläche des ersten Zylinderteils (4) über ein Zylinderzwischenteil (5) gekoppelt ist, wobei der Schlüsselhohlraum (9) nicht in diese Zwischenteil (5) reicht, während das Zylinderzwischenteil (5) mit einem zerbrechenden Teil (20) versehen ist.

7. Fahrradschloss nach Anspruch 6, wobei das Bedianungselament (7a, 7b) durch mindestens einen Bedienungsvorsprung gebildet ist, der sich auf dem zweiten Zylinderteil (6) erstreckt, zum Beispiel auf einer Stirnfläche dieses Zylinderteils (6).

8. Fahrradschloss nach irgendeinem der Ansprüche 1 bis 5, wobei das Bedienungselement (106) und das zweite Zylinderteil ein und dasselbe Teil sind.

9. Fahrradschloss nach Anspruch 8, wobei das zweite Zylinderteil (106) mittels der ersten zerbrechlichen Verbindung (120) an einen Außenumfang des ersten Zylinderteils (104) gekoppelt ist.

10. Fahrradschloss nach Irgendeinem der vorangegangenen Ansprüche, wobei die ersten zerbrechliche Verbindung (20; in) einen reduzierten Abschnitt, eine Brechernut, zerbrechliches Material und/oder eine Schwachstelle eines jeweiligen Schlossteils umfasst.

11. Fahrradschloss nach irgendeinem der vorangegangenen Ansprüchen, nobel der Zylinder (3; 103) in einer normalen Gebrauchsposition mittels zumindest einer zweiten zerbrechlichen Verbindung (30; 130) an das Schlossgehäuse (2; 102) gekoppelt ist, so dass der Zylinder (3; 103) aus dieser normalen Gebrauchsposition in eine relativ zu dem Schlossgehäuse (2; 102) axial nach Innen bewegten Position nach dem Zerbrechen der zweiten zerbrechlichen Verbindung (30; 130) gebracht werden kann.

12. Fahrradschloss nach irgendeinem der vorangegangenen Ansprüche, umfassend:
- ein Ringschloss, das mit einem Schlossgehäuse mit einem ringförmigen Schließbolzen versehen ist; oder
- ein Schloss, dessen Gehäuse mit einem Halteteil und mit einem Blockierelement in der Form eines Schließzapfen, der mit dem Halteteil verbunden werden kann oder verbunden ist, und mit einem Aufnahmeteil versehen ist, das mit einer Schiießzapfenöffnung zur Aufnahme eines freien Endes des Schließzapfens In einer geschlossenen Postition des Schlosses versehen ist.

13. Fahrrad, das mit einem Schloss nach Irgendeinem der vorangehenden Ansprüche versehen ist.

14. Zylinder eines Schlosses nach irgend einem der Ansprüche 1 bis 12.

## Revendications

1. Antivol de bicyclette, comprenant un boîtier d'antivol (2 ; 102) et un cylindre d'antivol (3 ; 103), dans lequel le cylindre d'antivol (3 ; 103) est muni d' :
- une première partie de cylindre (4 ; 104), avec une cavité à clé (9 ; 106) s'étendant depuis une extrémité extérieure de cette partie de cylindre, pour recevoir une clé d'actionnement, la cavité à clé (9 ; 109) étant munie de plaques de verrouillage, susceptibles d'être actionnées par la clé ; et
- une deuxième partie de cylindre (6 ; 106), couplée à la première partie de cylindre (4 ; 104), ladite deuxième partie de cylindre étant munie d'au moins l'élément de blocage (11 ; 111) pour actionner au moins un élément de verrouillage (8a, 8b ; 108) de l'antivol (1 ; 101) durant un usage normal de l'antivol ; le cylindre (3 ; 103) est muni d'au moins un premier joint (20 ; 120) fracturable, de manière que la deuxième partie de cylindre (6 ; 106) puisse être désaccouplée de la première partie de cylindre (4 ; 104) par fracturation de ce joint (20 ; 120) ;
**caractérisé en ce que** la deuxième partie de cylindre (6 ; 106) n'est pas munie de ladite cavité à clé (9 ; 106).

2. Antivol de bicyclette selon la revendication 1, dans lequel **caractérisé en ce que** l'antivol est muni de moyens de blocage (11 ; 111), conçus pour venir en prise avec une partie (7b ; 106) de ladite deuxième partie de cylindre (6 ; 106), de manière que, après que le cylindre (3 ; 103) ait été passé d'une position normale d'utilisation à une position forcée, déplacée axialement à l'intérieur par rapport au boîtier d'antivol (2 ; 102), les moyens de blocage (11 ; 111) limitent une rotation de la deuxième partie de cylindre (6 ; 106).

3. Antivol de bicyclette selon la revendication 2, dans lequel lesdits moyens de blocage sont munis d'un élément de blocage (11 ; 111) couplé de façon indéplaçable au boîtier d'antivol (2 ; 102), l'élément de blocage (11 ; 111) étant muni d'une cavité de blocage (12 ; 112) ou d'une saillie de blocage, pour venir en prise avec une saillie de blocage (7b ; 106) ou une cavité de blocage, respectivement de ladite deuxième partie de cylindre (6 ; 106), après que ladite deuxième partie de cylindre (6 ; 106) ait été passée à une position déplacée vers l'élément de blocage (11 ; 111).

4. Antivol de bicyclette selon la revendication 3, dans lequel un dit élément d'actionnement (7b ; 106), sur un côté, et ladite saillie de blocage (7b) de ladite deuxième partie de cylindre (6 ; 106), sur l'autre côté, sont une seule et même partie.

5. Antivol de bicyclette selon l'une quelconque des revendications 2 à 4, dans lequel ledit premier joint fracturable est fracturable sous l'influence de la rotation de la première partie de cylindre, au moins lorsque la rotation de la deuxième partie de cylindre (6 ; 106) est limitée par les moyens de blocage (11 ; 111).

6. Antivol de bicyclette selon l'une quelconque des revendications précédentes, dans lequel la deuxième partie de cylindre (6) est couplée à une face d'extrémité intérieure de la première partie de cylindre (4), via une partie intermédiaire de cylindre (5), ladite cavité à clé (9) ne pénétrant pas dans cette partie intermédiaire (5), tandis que la partie intermédiaire de cylindre (5) est munie d'une partie de fracturation (20).

7. Antivol de bicyclette selon la revendication 6, dans lequel ledit élément d'actionnement (7a ; 7b) est formé par au moins une saillie d'actionnement, s'étendant sur la deuxième partie de cylindre (6), par exemple sur une face d'extrémité de cette partie de cylindre (6).

8. Antivol de bicyclette selon l'une quelconque des revendications 1 à 5, dans lequel ledit élément d'actionnement (106) et ladite deuxième partie de cylindre sont une seule et même partie.

9. Antivol de bicyclette selon la revendication 8, dans lequel la deuxième partie de cylindre (106) est couplée, au moyen dudit premier joint fracturable (120), à une circonférence extérieure de la première partie de cylindre (104).

10. Antivol de bicyclette selon l'une quelconque des revendications précédentes, dans lequel ledit premier joint fracturable (20 ; 120) comprend une partie réduite, une gorge de fractureur, un matériau fracturable et/ou un affaiblissement d'une partie d'antivol respective.

11. Antivol de bicyclette selon l'une quelconque des revendications précédentes, dans lequel ledit cylindre (3 ; 103), en une position normale d'utilisation, est couplé au moyen d'au moins un deuxième joint fracturable (30 ; 130), au boîtier d'antivol (2 ; 102), de manière que le cylindre (3 ; 103) puisse être passé, de cette position normale d'utilisation à une position déplacée axialement vers l'intérieur, par rapport au boîtier d'antivol (2 ; 102), après rupture du deuxième joint fracturable (30 ; 130).

12. Antivol de bicyclette selon l'une quelconque des revendications précédentes, comprenant :
- un verrou annulaire, muni d'un boîtier d'antivol comprenant un boulon de verrouillage annulaire ; ou
- un verrou dont le boîtier est muni d'une partie support et d'un élément de blocage se présentant sous la forme d'une broche de verrouillage, susceptible d'être connectée à la partie support ou connectée à celle-ci, et avec une partie réceptrice, munie d'une ouverture à broche de verrouillage, pour recevoir une extrémité libre de la broche de verrouillage lorsque l'antivol se trouve en position fermée.

13. Bicyclette munie d'un antivol selon l'une quelconque des revendications précédentes.

14. Cylindre d'un antivol selon l'une quelconque des revendications 1 à 12.
